# EUROPEAN PATENT SPECIFICATION

(11) **EP 3 311 458 B1**
(45) Date of publication and mention of the grant of the patent: **13.10.2021**
(21) Application number: 16753966.7
(22) Date of filing: 17.06.2016
(51) Int. Cl.: H02J 3/00, H02J 13/00, G06Q 30/04, G06Q 50/06

(54) **SYSTEM FOR DISTRIBUTING ELECTRICAL POWER IN MOBILITY**
SYSTEM ZUR VERTEILUNG VON ELEKTRISCHER ENERGIE IN DER MOBILITÄT
SYSTÈME DE DISTRIBUTION D'ÉNERGIE ÉLECTRIQUE EN MOBILITÉ

(30) Priority: 17.06.2015 IT UB20151446
(43) Date of publication of application: 25.04.2018
(73) Proprietor: Engineering Ingegneria Informatica S.p.A., 00144 Roma (IT)
(72) Inventor: TARTUFERI, Vincenzo, 20080 Basiglio (MI) (IT); FONTANESI, Fabrizio, 20127 Milano (IT); ERMELLINO, Franco, 00073 Castel Gandolfo (RM) (IT)
(74) Representative: Marchioro, Paolo
(86) International application number: PCT/IB2016/053622
(87) International publication number: WO 2016/203448

(56) References cited:
- EP-A1- 2 782 375
- WO-A2-2012/145627
- GB-A- 2 478 315
- US-A1- 2010 201 310
- US-A1- 2010 228 687
- US-A1- 2012 173 418
- US-A1- 2012 290 470

## Description

The invention regards a system for distributing electrical power in "roaming", comprising at least one device for supplying electrical power in roaming.

The invention also regards a method for utilising a system for supplying electrical power in roaming by means of the aforementioned system for distributing electrical power in roaming.

It should be observed that, in the current context, the expression "roaming" electrical power is used to indicate the possibility, for a person or company, to draw electrical power at their own expenses from an electrical power supply not registered under their name, so as to allow the operation or charging of electrical/electronic devices belonging to such person or company. In particular, as observable hereinafter, in order to gain access to electrical power in roaming, the person or company referred to hereinafter as "user in roaming" will have the possibility to sign up to a subscription or purchase a single prepaid service made available by suitable market operators, using the remaining credit of the supply thereof or using the remaining credit/power in roaming thus creating a services "exchange" social network.

It should also be observed that in this context, the expression "electrical power supply" shall be used to indicate a supply activated by people or organisations at home or in offices where they live or work by signing a contract with a market operator

Document US2010/228687 A1 discloses an electricity vending device for an electricity vending system. The device comprise an electrical outlet which supplies the electricity to the user. A user interface receives payment information. A switch is controlled by a controller for connecting and disconnecting the electricity to and from the electrical outlet. A meter or timer measures the amount of electricity supplied to the electrical outlet. A communication interface sends the payment information and the amount of electricity to a payment processor. The documents discloses also a software product for distributing electricity from an electric vending device to an external electric device. The device is foreseen for use in areas like airports, bus stations, train stations, gas stations, hotels, rental properties, campsites and other public places and it may be also used in moving vehicles such as airplanes, trains, buses and ships.

Furthermore, it is known that the ever-growing use of devices that require frequent charging, including smartphones and tablets, as well as the increasing number of electric vehicles which require a high amount of electrical power will require boosting the current charging network so as to offer the owners of the aforementioned devices and electric vehicles suitable amount of operating power and safety. In particular, such boosting of the charging network may occur by using the networks, which provide for the presence of a gauge (conventional or electronic metre) for measuring the flow of electrical power upstream of each of the aforementioned supplies, do not allow distinguishing the drawing of electrical power from a power socket and used by the owner of the supply or other users using such supply.

Thus, up to date, should the owner of a device or electric vehicle use someone else's electrical supply to charge the device or vehicle thereof, the cost of the electrical power needed to carry out said charging operation would be charged on the owner of the aforementioned supply and not the owner of the device or of the vehicle like should be the case.

Thus the owners of the various electrical supplies activated in buildings open to the public such as cafeterias, restaurants, cultural centres, airports or parking spaces, are reluctant to allow their potential patrons to use their power sockets.

At times, they even go to the extent of purposely locating these power sockets in areas not easily accessible for the patrons so as to discourage the use thereof.

Thus, this problem - which is directly observable in the issue regarding the correct invoicing of the electrical power costs - is a major hindrance to the actual widespread use of the electrical supplies as charging points for the electric devices and vehicles and, generally, to the use of electrical supplies by users different from the actual owners.

The present invention intends to overcome these drawbacks.

In particular, an object of the present invention is to obtain a system for distributing electrical power in roaming capable of allowing rapidly boosting the network of points for charging electric devices and vehicles available for users in roaming.

Thus, another object of the invention is to obtain a system for distributing electrical power in roaming capable of increasing roaming subscription or purchasing single roaming services for the supply of electrical power made available to people or companies in need of using third party electrical supplies.

More specifically, in the current context the expression "single service" is used to indicate a prepaid "pay per use" service for the supply of electrical power with costs depending on the duration in terms of time (t) of use of the device of the invention and/or on the maximum amount of electrical power (kWh) that can be drawn in a time interval and in addition, or alternatively, on the maximum electrical power (kW) that can be achieved.

Last but not least, an object of the present invention is to provide a system for distributing electrical power in roaming, but without altering the current electrical power market regulation and management model.

The aforementioned objects are attained by providing a system for distributing electrical power in roaming according to independent claim 1 and by a method for utilising an electrical power supply service in roaming according to independent claim 15.

Further characteristics of the system for distributing electrical power in roaming of the invention are described in the dependent claims.

In addition, the aforementioned objects are also attained by the method of using a service for supplying electrical power in roaming according to claim 15. The aforementioned objects and the advantages described hereinafter, shall be apparent from the description of a preferred embodiment of the invention provided, solely by way of non-limiting example, with reference to the attached drawings, wherein:
- fig. 1 schematically represents the system for distributing electrical power in roaming of the invention;
- figs. 2 and 3 represent, in an axonometric view, respectively the front part and the rear part of the device for supplying electrical power in roaming of the invention;
- fig. 4 schematically represents the internal structure of the device for supplying electrical power in roaming of the invention.

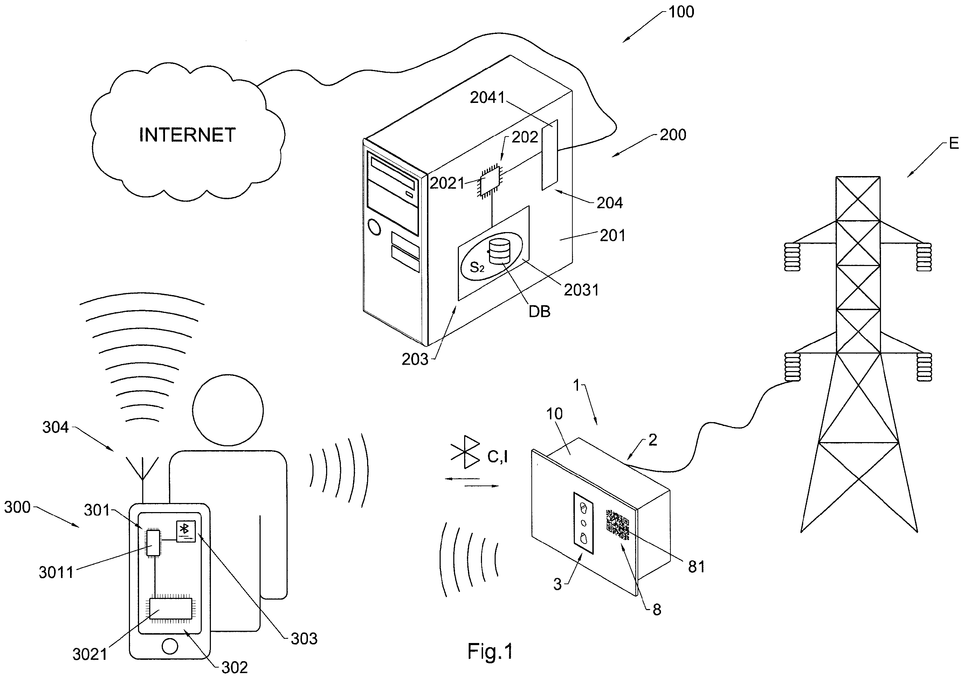

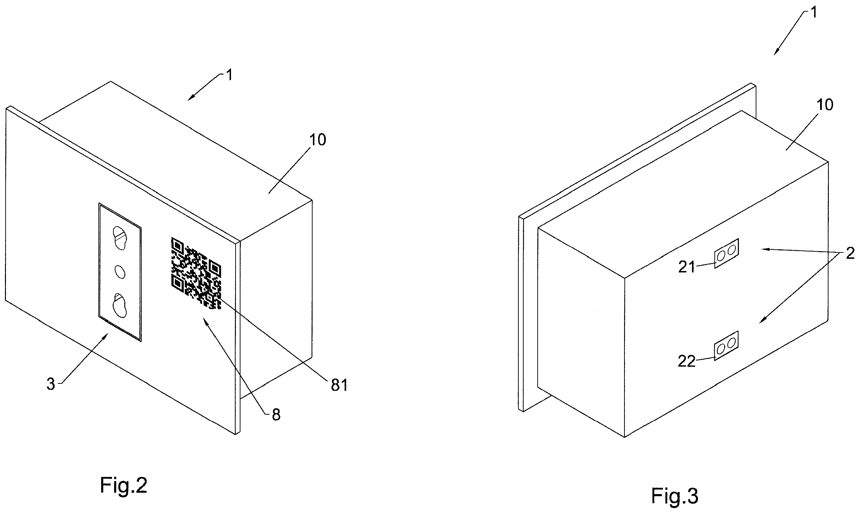

The system for distributing electrical power in roaming of the invention, indicated in its entirety with **100** in fig. 1, firstly comprises at least one supply device represented in its entirety in figs. 2 and 3, where it is indicated with 1. The aforementioned device **1** is provided with means **2** for the connection to a source of electrical power **E**, in detail to the electrical power distribution network **E,** as schematised in fig. 1. Such connection means **2**, according to the preferred embodiment of the invention, in particular, comprise at least two electrical terminals **21** and **22**, represented in fig. 3, configured to allow cabling the "phase" conductor and the "neutral" conductor of such electrical power distribution network **E** respectively.

However, in alternative embodiments of the invention, the connection means **2** may also comprise socket means configured to be removably connected to power sockets of the standard type of an electrical supply. Thus, the device **1** of the invention, contrary to the preferred embodiment described above, is of the portable type.

Now back to the preferred embodiment of the invention, the device **1** further comprises, a power socket **3** of the so-called "plug" type for supplying electrical power with the same electrical characteristics, in particular voltage and frequency, as the electrical power arranged at the input to the same device **1.** In the case of European electrical power distribution network **E,** the electrical power dispensable by the plug power socket **3** has a 220V electrical voltage and a 50 Hz frequency.

Even more in detail, as observable in fig. 2, such plug power socket **3** is preferably of the bivalent Italian standard type, i.e. capable of receiving both the 10 A and 16 A plugs.

However, such plug power socket **3** may even be exclusively of the 10 A Italian standard type or the 16 A Italian standard type. In addition, such plug power socket **3** could also be of any other known standard type, for example the German standard (schuko).

Furthermore, according to alternative embodiments of the invention, the supply device **1** could be provided with two or more of the aforementioned plug power sockets **3.**

Furthermore, it is not excluded that, according to further embodiments of the invention, the device **1** may be provided, additionally or alternatively to one or more of the aforementioned plug power sockets **3**, also with one or more female USB connectors, not represented in the figures, capable of supplying suitably transformed power, usually with 5V in DC, through electrical transformation means interposed between the USB connector and the aforementioned connection means **2.**

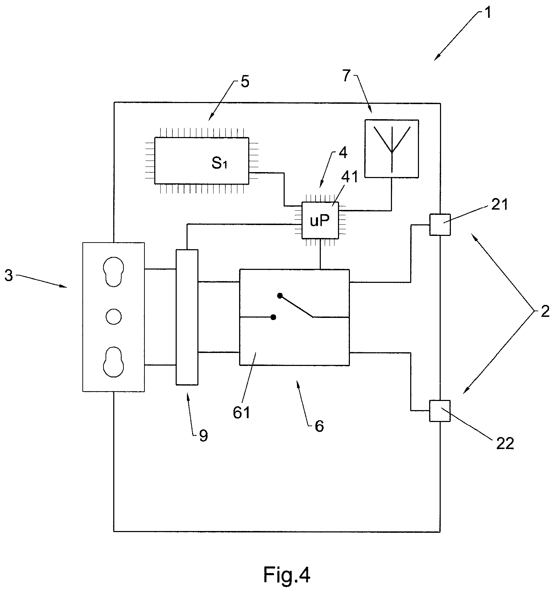

According to the invention, the electrical power supply device **1**, comprises - therein - as schematically represented in fig. **4**, processing means **4**, preferably a microprocessor **41**, and non-volatile memorisation means **5** operatively connected to the aforementioned processing means **4.** Furthermore, the device **1** of the invention comprises means **6** for interrupting the normally active electrical continuity, electrically interposed between the plug power socket **3** and the means **2** for the connection to the electrical power distribution network **E.** The interruption means **6** are also operatively connected to the processing means **4.** The expression "normally active" is used to indicate that, in the absence of a control signal that determines the switching of the aforementioned interruption means **6**, the latter are normally configured to prevent the flow of electrical power between the connection means **2** and the power socket **3.**

Preferably, such interruption means **6** comprise an electronic switch **61** of the normally open type and controlled by the aforementioned processing means **4.** The device **1** of the invention also comprises communication means **7** operatively connected to the processing means **4** to allow the communication with at least one external electronic device **300,** as described further in detail below and as schematically represented in fig. 1.

The aforementioned communication means **7** preferably but not necessarily comprise radio waves data transmission means. In addition, such communication means **7** are preferably configured to establish a communication, in the so-called "pairing" mode, with the aforementioned electronic device **300.** In detail, the communication means **7** are preferably structured and configured to implement the communication standard referred to as Bluetooth or BT.

However, such communication means **7** could also be configured to implement different wireless communication technologies of the NFC (Near Field Communication) type or long range wireless communication technologies. The device **1** of the invention also comprises one or more sequences of computer instructions **S₁** memorised in the non-volatile memorisation means **5** which, when executed by the processing means **4**, switch the interruption means **6** so as to allow the supply of electrical power through the aforementioned plug power socket **3**. Such switching is carried out by the processing means **4** following a control signal **C** sent by the external electronic device **300** and received through the communication means **7.**

According to the preferred embodiment of the invention, the aforementioned one or more sequences of computer instructions **S₁**, when executed by said processing means **4**, are configured to allow the reception, jointly with the aforementioned control signal **C**, also of a plurality of information **I** regarding the conditions for supplying electrical power by the device **1.**

Such one or more sequences of computer instructions **S₁** are further configured, when executed by the processing means **4**, to allow the device **1** to autonomously manage the supply of electrical power following the aforementioned control signal **C** and according to the information **I** regarding the conditions for supplying electrical power received from the aforementioned electronic device **300**. In other words, the supply device **1** of the invention requires opening a communication channel between the supply device and the electronic device **300** strictly exclusively for the transmission of the aforementioned control signal **C** and the information **I** regarding the conditions for supplying electrical power. Subsequently, such communication channel can be closed and the device **1** is still capable of managing the supply of electrical power in a stand-alone mode.

Advantageously, the latter characteristic allows the user in roaming to avoid using or keeping the aforementioned electronic device **300** operative over the entire duration of use of the supply device **1** of the invention.

In particular, as regards the information **I** regarding the conditions for supplying electrical power sent to the device **1**, as mentioned above, their nature depends on the type of consumption service purchased by the user in roaming who intends to use the device **1** of the invention. In detail, such information **I** may regard, combined or alternatively, the maximum duration, in terms of time (t), of use of the device **1** of the invention by the user in roaming, the maximum amount of electrical power (kWh) that can be drawn and/or the maximum electrical power (kW) that can be achieved.

Thus, the device **1** of the invention is configured so that it interrupts the supply of electrical power switching the interruption means **6** once again, upon reaching one or more of the limits set by the aforementioned information **I.** Furthermore, the device **1** of the invention, preferably but not necessarily, comprises unique identification means **8** configured to allow the unique identification of the device **1** by the aforementioned external electronic device **300**. According to the preferred embodiment of the invention, such unique identification means **8** comprise, as observable in fig. 2, a barcode **81**, preferably a QR code, marked on the device **1** and corresponding to a unique identification code associated to the same device **1.**

Alternatively, such unique identification means **8** could comprise an RFID tag, an NFC device or a different identification device in which the aforementioned unique identification code associated to the device **1** is memorised. In any case, such unique identification code, as described below, allows establishing the aforementioned direct communication channel between the electronic device **300** owned by the user in roaming and a specific supply device **1**.

The device **1** for supplying electrical power of the invention further comprises measuring means **9** configured to measure the electrical characteristics of the power dispensed through the aforementioned plug power socket **3**. In particular, such measuring means **9**, are preferably but not necessarily capable of detecting the electrical current and electrical voltage values regarding the dispensed electrical power both instantly and at a pre-set time interval. These values measured during the supply of electrical power by the device **1**, alongside the measuring of the duration of the aforementioned supply, are used by the processing means **4**, during the execution of the aforementioned sequence of instructions **S₁**, to verify whether the limit conditions set by the aforementioned information **I** have been met. If the conditions have been met, as mentioned previously, the device **1** is configured to interrupt the supply of electrical power by switching, in particular reactivating, the aforementioned interruption means **6**.

Lastly, preferably but not necessarily, the supply device **1** of the invention has an external casing **10** with size and shape such to allow the installation of the device **1** in electrical junction boxes of the standard type.

Advantageously, such characteristic allows attaining a system for distributing power in roaming of the invention, outlined hereinafter, in a simple and quick manner. In particular, advantageously, the installation of the supply device **1** of the invention does not require special wall works or building special support structures in that one can make use of the elements, in particular electrical junction boxes, of pre-existent electrical systems in a particular environment. The system **100** for distributing electrical power in roaming, represented in its entirety in fig. 1, as already mentioned comprises at least one device **1** for supplying electrical power having the aforementioned characteristics according to the preferred embodiment or according to the aforementioned alternative embodiments.

Usually, such device **1** is positioned in public or private environments such as for example railway stations, airports, restaurants, car parkings etc.

As mentioned above, such devices **1** are preferably inserted in electrical junction boxes of the standard type instead of the conventional power sockets. However, such devices **1** can also be arranged in special columns independent from the structure of the aforementioned private or public environments.

The distribution system **100** further comprises a management computer apparatus **200,** usually a remote server **201,** provided with processing means **202,** non-volatile memorisation means **203,** operatively connected to the processing means **202,** and remote communication means **204,** also operatively connected to the processing means **202** and configured to allow the communication of the remote server **201** with the external electronic devices **300.**

In detail, the processing means **202** preferably comprise a microprocessor **2021,** the non-volatile memorisation means **203** comprise at least one magnetic memorisation medium, such as a hard disk **2031,** while the remote communication means **204** comprise a network interface controller **2041** configured for Internet connection.

Such remote server **201** further comprises, memorised on the memorisation means **203,** a database **DB** which includes information regarding users in roaming registered with one or more operators offering electrical power distribution services in roaming.

In particular, such information comprise identification and invoicing data of the single user in roaming. In addition, such information comprise the aforementioned information **I** regarding the conditions for supplying electrical power in roaming made available for each user in roaming, should the user in question have signed a subscription contract to access electrical power in roaming or purchased a particular pay per use service regarding electrical power in roaming at the time of registration or subsequently.

Such remote server **201** is provided with one or more sequences of instructions **S₂** memorised in the non-volatile memorisation means **203,** which, when executed by the aforementioned processing means **202,** allow opening a communication channel with at least one electronic device **300** through the remote communication means **204.** In particular, as defined below, such sequence of instructions **S₂**, during execution, allows sending to such electronic device **300,** upon request by the latter, information regarding a registered user in roaming, particularly the information **I** regarding the conditions for supplying electrical power provided for the aforementioned user in roaming.

Lastly, the system **100** for distributing electrical power in roaming of the invention comprises the aforementioned electronic device **300** provided for a user in roaming.

As observable in fig. 1, the electronic device **300** in particular comprises processing means **301** and non-volatile memorisation means **302** operatively connected to the processing means **301.** Even more in detail, the processing means **301** comprise a microprocessor **3011** and the aforementioned non-volatile processing means **302** preferably comprise a solid state memorisation unit **3021.** Furthermore, the electronic device **300** comprises first communication means **303** to allow opening a first communication channel with at least one device **1** for supplying electrical power of the invention and second communication means **304** for allowing the opening of a second communication channel with the aforementioned management computer apparatus **200.** As regards, in particular, the first communication means **303,** they preferably, like in the case of the device **1** of the invention, comprise radio wave data transmission means configured to operate in the so-called "pairing" mode. Preferably, such first communication means **303** are structured and configured to implement the communication standard referred to as Bluetooth or BT.

On the other hand, as regards the second communication means **304,** according to the preferred embodiment, they comprise transmission means which allow access to the Internet through a mobile phone communication. Lastly, the electronic device **300** comprises one or more sequences of instructions **S₃** memorised in the aforementioned non-volatile memorisation means **302,** which, when executed by the processing means **301,** allow opening the aforementioned second communication channel with the management computer apparatus **200** through the second communication means **304.** In addition, as described in detail hereinafter, such one or more sequences of instructions **S₃**, during execution, allow identifying the device **1** so as to establish the aforementioned first communication channel between the device **1** and the electronic device **300.** The communication between the two devices **1** and **300** allows sending to the supply device **1** the control signal **C** and the information **I** regarding the conditions for supplying electrical power to be operated.

A smartphone or a tablet owned by the user in roaming and in which a special computer application comprising the sequence or sequences of computer instructions **S₃** could be preferably but not necessarily used as an electronic device **300.**

However, according to alternative embodiments of the system for distribution in roaming **100** of the invention, the electronic device **300** could also be a PC or a Notebook or any other electronic device, as long as the sequence or the aforementioned sequences of instructions **S₃** is/are loaded and executed and as long as it is capable of establishing a first and a second communication channel respectively with the device **1** and with the management computer apparatus **200.**

Operatively, as mentioned previously, a system for distributing electrical power in roaming **100** of the invention is obtained by providing and configuring a computer management apparatus **200** under the administration of one or more operators for the distribution of electrical power in roaming present in the market. Furthermore, at least one device **1** for supplying electrical power in roaming in an environment accessible to the public can be installed by connecting it to the electrical power distribution network **E.** A user in roaming planning to access such system **100** has the possibility of using the own smartphone or tablet, provided with the aforementioned specific computer application, to implement the operations described above with reference to the electronic device **300.**

Clearly, such computer application is preferably provided by the market operators in charge of the administration of the aforementioned management computer apparatus **200.**

In particular, when the user in roaming needs to gain access to a service for supplying electrical power in roaming, the user provides for, through the aforementioned application, opening a communication channel with the management computer apparatus **200** and, if already registered, the user may access the data thereof present in the aforementioned database **DB.** On the other hand, if the user in roaming is not yet registered he will have the possibility to create a new "account" using the electronic device **300** thereof. Furthermore, through the aforementioned application loaded in the electronic device **300** thereof, such user in roaming has the possibility to purchase one or more pay per use services for supplying electrical power in roaming by means of the supply devices **1** of the invention. In particular, as mentioned previously, the market operator or operators in charge of the administration of the entire distribution system **100** may offer their users in roaming different types of services, each one of which allows access to electrical power in roaming limited in terms of time and/or limited in terms of the amount of maximum electrical power that can be drawn and/or in terms of the maximum electrical power that can be achieved.

At this point, the user in roaming identifies the specific device **1** intended to be used for access to the previously purchased service. Such identification, preferably but not necessarily, consists in acquiring, using a smartphone or tablet thereof which serves as an electronic device **300,** the digital image of the barcode **81** marked on the device **1** and in processing such image, through the aforementioned application, so as to obtain the unique identification code associated to the device **1.** Such unique identification code is used to establish a communication channel between the electronic device **300** of the user in roaming and the selected supply device **1.** In particular, as seen previously, according to the preferred embodiment of the invention, a communication channel is established between the two devices **1** and **300** through the Bluetooth communication standard.

Then, the user in roaming sends to the selected device **1** the information **I** regarding the conditions for supplying electrical power compliant with the purchased service and the aforementioned control signal **C** to start supplying. Subsequently, the supply device **1** is capable of supplying electrical power, preferably autonomously, as long as the supply conditions established by the information **I** received are kept. Obviously, in the meanwhile the user in roaming will have connected the device or electric vehicle to be charged to the power socket **3.**

Upon reaching the limit values of the supply conditions, the device **1,** preferably autonomously, switches the state of the aforementioned interruption means **6** from deactivated to activated, thus interrupting the supply of electrical power.

Thus, in the light of the above, the system for distributing electrical power in roaming of the invention attains the pre-set objects.

In particular, the object of obtaining a system for distributing electrical power in roaming, capable of allowing rapidly boosting the network of points for charging electric devices and vehicles available for users in roaming, is attained.

Thus, the object of obtaining a system for distributing electrical power in roaming, capable of increasing roaming subscriptions or purchasing single roaming services for supply of electrical power made available to people or companies in need of using third party electrical supplies, is also attained. Lastly, the object of providing a system for distributing electrical power in roaming, but without altering the current electrical power market regulation and management model, is also attained.

## Claims

1. System (100) for distributing electrical power in roaming, **characterised in that** it comprises:
- at least one device (1) for supplying electrical power in roaming, provided with:
- connection means (2) for the connection to a source of electrical power (E);
- at least one power socket (3) for supplying said electrical power;
- processing means (4);
- non-volatile memorisation means (5) operatively connected to said processing means (4);
- means (6) for interrupting the electrical continuity, electrically interposed between said at least one power socket (3) and said connection means (2), said interruption means (6) being operatively connected to said processing means (4);
- communication means (7) for allowing the communication with at least one external electronic device (300) operatively connected to said processing means (4);
- one or more sequences of computer instructions (S₁) memorised in said non-volatile memorisation means (5), said one or more sequences of computer instructions (S₁), when executed by said processing means (4), providing for switching said interruption means (6) so as to allow the supply of electrical power through said at least one power socket (3) following a control signal (C) and according to a plurality of information (I) sent by said external electronic device (300) and received through said communication means (7), said information (I) regarding the electrical power supply condition;
- a management computer apparatus (200) provided with:
- processing means (202);
- non-volatile memorisation means (203) operatively connected to said processing means (202);
- remote communication means (204) for allowing the communication with said at least one external electronic device (300);
- a database (DB) memorised in said non-volatile memorisation means (203), said database (DB) including information regarding users in roaming, said information comprising identification and invoicing data for each user in roaming and said information (I) regarding the conditions for supplying said electrical power;
- one or more sequences of computer instructions (S₂) memorised in said non-volatile memorisation means (203), said one or more sequences of computer instructions (S₂), when executed by said processing means (202), allowing establishing a communication channel with said at least one external electronic device (300) through said remote communication means (204), said one or more sequences of computer instructions (S₂) further being configured to send said information (I) to said external electronic device (300);
- said at least one electronic device (300) comprising:
- processing means (301);
- non-volatile memorisation means (302) operatively connected to said processing means (301);
- first communication means (303) for establishing a first communication channel with said at least one supply device (1);
- second communication means (304) for establishing a second communication channel with said management computer apparatus (200);
- one or more sequences of computer instructions (S₃) memorised in said memorisation means (302), said one or more sequences of computer instructions (S₃), when executed by said processing means (301), allowing to:
- establishing said second communication channel with said management computer apparatus (200) to receive said information (I) regarding a specific user in roaming;
- identifying said at least one supply device (1);
- establishing said first communication channel with said supply device (1);
- sending to said supply device (1) said information (I) received from said management computer apparatus (200) and a control signal (C) for starting the electrical power supply.

2. Distribution system (100) according to claim 1, **characterised in that** said information (I) regarding the electrical power supply condition comprise, combined or alternatively, the maximum duration of use of said at least one supply device (1) in terms of time (t), the maximum amount of electrical power (kWh) that can be drawn and/or the maximum electrical power (kW) that can be achieved.

3. Distribution system (100) according to any one of the preceding claims, **characterised in that** said one or more sequences of computer instructions (S₁) memorised in said non-volatile memorisation means (5) of said at least one supply device (1) are also configured, when executed by said processing means (4), to allow said supply device (1) to autonomously interrupt the supply of said electrical power upon reaching one or more of the limits set by said information (I) regarding the electrical power supply condition.

4. Distribution system (100) according to any one of the preceding claims, **characterised in that** said supply device (1) comprises unique identification means (8).

5. Distribution system (100) according to claim 4, **characterised in that** said unique identification means (8) comprise a barcode (81) imprinted on said supply device (1), said barcode (81) corresponding to a unique identification code associated to said supply device (1).

6. Distribution system (100) according to claim 4, **characterised in that** said unique identification means (8) comprise an RFID tag and/or an NFC device in which a unique identification code associated to said supply device (1) is memorised.

7. Distribution system (100) according to any one of the preceding claims, **characterised in that** said supply device (1) comprises means (9) for measuring the electrical characteristics of the electrical power supplied through said power socket (3).

8. Distribution system (100) according to claim 7, **characterised in that** said measuring means (9) are configured to detect the values of electric current and electric voltage of said electrical power supplied by said supply device (1).

9. Distribution system (100) according to any one of the preceding claims, **characterised in that** said at least one electronic device (300) is a smartphone or a tablet owned by the user in roaming in which a computer application comprising said sequence or said sequences of computer instructions (S₃) is loaded and executed.

10. Distribution system (100) according to any one of the preceding claims, **characterised in that** said first communication means (303) of said electronic device (300) and said communication means (7) of said supply device (1) comprise both radio wave data transmission means configured to operate in "pairing" mode.

11. Distribution system (100) according to any one of the preceding claims, **characterised in that** said management computer apparatus (200) comprises a remote server (201) wherein said processing means (202) comprise a microprocessor (2021), said non-volatile memorisation means (203) comprise a hard disk (2031) and said remote communication means (204) comprise a network interface controller (2041) configured for Internet connection.

12. Distribution system (100) according to any one of the preceding claims, **characterised in that** said at least one power socket (3) of said supply device (1) comprises a plug power socket (3) for supplying electrical power with the same characteristics as the electrical power arranged at the input to said supply device (1).

13. Distribution system (100) according to any one of the preceding claims, **characterised in that** said at least one power socket (3) of said supply device (1) comprises a female USB connector, capable of supplying power suitably transformed by means of electrical transformation means interposed between said USB connector and said connection means (2).

14. Distribution system (100) according to any one of the preceding claims, **characterised in that** said communication means (7) of said supply device (1) are structured and configured to implement the Bluetooth communication standard.

15. Method for utilising an electrical power supply service in roaming by means of the distribution system (100) according to any one of the preceding claims, **characterised in that** it provides for the following operations:
- opening a communication channel between an electronic device (300) owned by a user and the management computer apparatus (200);
- creating, through said electronic device (300), a new account regarding the service of supplying electrical power in roaming or, if said account had been created previously, accessing by a user, by means of said electronic device (300), to the data thereof present in the database (DB) present in said management computer apparatus (200);
- purchasing, by a user, by means of said own electronic device (300), one or more services for supplying electrical power in roaming;
- identifying, by means of said electronic device (300), the specific supply device (1) intended to be used for accessing the purchased service;
- after said identification, establishing a communication channel between said electronic device (300) owned by the user and said supply device (1);
- sending the information (I) regarding the electrical power supply conditions compliant with the purchased service and the control signal (C) for starting the supply to said supply device (1), by means of said electronic device (300);
- supplying, by said supply device (1), the electrical power so that the supply conditions established by said information (I) are maintained.

## Patentansprüche

1. System (100) zur Roamingverteilung von elektrischer Energie, **dadurch gekennzeichnet dass** es Folgendes umfasst:
- mindestens eine Vorrichtung (1) zur Roamingversorgung von elektrischer Energie, versehen mit:
- Anschlussmitteln (2) für den Anschluss an eine Quelle elektrischer Energie (E);
- mindestens einer Energiebuchse (3) zur Versorgung der elektrischen Energie;
- Verarbeitungsmitteln (4);
- nichtflüchtigen Speichermitteln (5), die mit den Verarbeitungsmitteln (4) betriebsmäßig verbunden sind;
- Mitteln (6) zur Unterbrechung der elektrischen Kontinuität, die zwischen der mindestens einen Energiebuchse (3) und den Anschlussmitteln (2) elektrisch angeordnet sind, wobei die Unterbrechungsmittel (6) mit den Verarbeitungsmitteln (4) betriebsmäßig verbunden sind;
- Kommunikationsmitteln (7), um die Kommunikation mit mindestens einer externen elektronischen Vorrichtung (300), die mit den Verarbeitungsmitteln (4) betriebsmäßig verbunden ist, zu ermöglichen;
- einer oder mehreren Sequenzen von Computerbefehlen (S₁), die in den nichtflüchtigen Speichermitteln (5) gespeichert sind, wobei die eine oder mehreren Sequenzen von Computerbefehlen (S₁), wenn sie von den Verarbeitungsmitteln (4) ausgeführt werden, vorgesehen sind die Unterbrechungsmittel (6) zu schalten, um die Versorgung von elektrischer Energie durch die mindestens eine Energiebuchse (3) nach einem Steuersignal (C) und gemäß einer Vielzahl von Informationen (I) zu ermöglichen, die von der externen elektronischen Vorrichtung (300) gesendet und durch die Kommunikationsmittel (7) erhalten werden, wobei die Informationen (I) die Bedingung für die Versorgung von elektrischer Energie betreffen;
- ein Computerverwaltungsgerät (200), das ausgestattet ist mit:
- Verarbeitungsmitteln (202);
- nichtflüchtigen Speichermitteln (203), die mit den Verarbeitungsmitteln (202) betriebsmäßig verbunden sind;
- Fernkommunikationsmitteln (204), um die Kommunikation mit mindestens einer externen elektronischen Vorrichtung (300) zu ermöglichen;
- einer Datenbank (DB), die in den nichtflüchtigen Speichermitteln (203) gespeichert ist, wobei die Datenbank (DB) Informationen über Roaming-Benutzer enthält; die Informationen Identifikations- und Rechnungsdaten für jeden Roaming-Benutzer umfassen und die Informationen (I), die Bedingungen für die Versorgung der elektrischen Energie betreffen;
- einer oder mehreren Sequenzen von Computerbefehlen (S₂), die in den nichtflüchtigen Speichermitteln (203) gespeichert sind, wobei die eine oder mehreren Sequenzen von Computerbefehlen (S₂), wenn sie von den Verarbeitungsmitteln (202) ausgeführt werden, das Einrichten eines Kommunikationskanals mit der mindestens einen externen elektronischen Vorrichtung (300) über die Fernkommunikationsmittel (204) ermöglichen; die eine oder mehreren Sequenzen von Computerbefehlen (S₂) ferner konfiguriert sind, um die Information (I) an die externe elektronische Vorrichtung (300) zu senden;
- wobei die mindestens eine elektronische Vorrichtung (300) Folgendes umfasst:
- Verarbeitungsmittel (301);
- nichtflüchtige Speichermittel (302), die mit den Verarbeitungsmitteln (301) betriebsmäßig verbunden sind;
- erste Kommunikationsmittel (303) zum Einrichten eines ersten Kommunikationskanals mit der mindestens einen Versorgungsvorrichtung (1);
- zweite Kommunikationsmittel (304) zum Einrichten eines zweiten Kommunikationskanals mit dem Computerverwaltungsgerät (200);
- eine oder mehrere Sequenzen von Computerbefehlen (S₃), die in den Speichermitteln (302) gespeichert sind, wobei die eine oder mehreren Sequenzen von Computerbefehlen (S₃), wenn sie von den Verarbeitungsmitteln (301) ausgeführt werden, Folgendes ermöglichen:
- Einrichten des zweiten Kommunikationskanals mit dem Computerverwaltungsgerät (200), um die Information (I) bezüglich eines spezifischen Roaming-Benutzers zu empfangen;
- Identifizieren der mindestens einen Versorgungsvorrichtung (1);
- Einrichten des ersten Kommunikationskanals mit der Versorgungsvorrichtung (1);
- Senden an die Versorgungsvorrichtung (1) der von dem Computerverwaltungsgerät (200) empfangenen Information (I) und eines Steuersignals (C) zum Starten der elektrischen Energieversorgung.

2. Verteilungssystem (100) nach Anspruch 1, **dadurch gekennzeichnet, dass** die Informationen (I) bezüglich der Bedingung für die Versorgung der elektrischen Energie, in Kombination oder alternativ, die maximale Nutzungsdauer, bezogen auf die Zeit (t), der mindestens einen Versorgungsvorrichtung (1); die maximal entnehmbare elektrische Energie (kWh) und/oder die maximal erreichbare elektrische Energie (kW) umfassen.

3. Verteilungssystem (100) nach irgendeinem der vorhergehenden Ansprüche, **dadurch gekennzeichnet, dass** die eine oder mehreren Sequenzen von Computerbefehlen (S₁), die in den nichtflüchtigen Speichermitteln (5) der mindestens einen Versorgungsvorrichtung (1) gespeichert sind, auch konfiguriert sind, wenn sie durch die Verarbeitungsmittel (4) ausgeführt werden, so dass, bei Erreichung einer oder mehrerer der durch die Information (I) bezüglich der Bedingung für die Versorgung der elektrischen Energie festgelegten Grenzen, die Versorgungsvorrichtung (1) die Versorgung der elektrischen Energie selbstständig unterbrechen kann.

4. Verteilungssystem (100) nach irgendeinem der vorhergehenden Ansprüche, **dadurch gekennzeichnet, dass** die Versorgungsvorrichtung (1) eindeutige Identifikationsmittel (8) umfasst.

5. Verteilungssystem (100) nach Anspruch 4, **dadurch gekennzeichnet, dass** die eindeutigen Identifikationsmittel (8) einen Barcode (81) umfassen, der auf die Versorgungsvorrichtung (1) aufgedruckt ist, wobei der Barcode (81) einem eindeutigen Identifikationscode entspricht, der der Versorgungsvorrichtung (1) zugeordnet ist.

6. Verteilungssystem (100) nach Anspruch 4, **dadurch gekennzeichnet, dass** die eindeutigen Identifikationsmittel (8) ein RFID-Tag und/oder eine NFC-Vorrichtung umfassen, in der ein eindeutiger Identifikationscode gespeichert ist, der der Versorgungsvorrichtung (1) zugeordnet ist.

7. Verteilungssystem (100) nach irgendeinem der vorhergehenden Ansprüche, **dadurch gekennzeichnet, dass** die Versorgungsvorrichtung (1) Mittel (9) zum Messen der elektrischen Eigenschaften der durch die Energiebuchse (3) gelieferten elektrischen Energie umfasst.

8. Verteilungssystem (100) nach Anspruch 7, **dadurch gekennzeichnet, dass** die Messmittel (9) konfiguriert sind, um die Werte des elektrischen Stroms und der elektrischen Spannung der von der Versorgungsvorrichtung (1) gelieferten elektrischen Energie zu erfassen.

9. Verteilungssystem (100) nach irgendeinem der vorhergehenden Ansprüche, **dadurch gekennzeichnet, dass** die mindestens eine elektronische Vorrichtung (300) ein Smartphone oder ein Tablet ist, das dem Roaming-Benutzer gehört, in dem eine Computeranwendung, umfassend die Sequenz oder die Sequenzen von Computerbefehlen (S₃), geladen und ausgeführt wird.

10. Verteilungssystem (100) nach irgendeinem der vorhergehenden Ansprüche, **dadurch gekennzeichnet, dass,** sowohl das erste Kommunikationsmittel (303) der elektronischen Vorrichtung (300) als auch das Kommunikationsmittel (7) der Versorgungsvorrichtung (1), Mittel zur Funkwellen-Datenübertragung umfassen, die für den Betrieb im "Pairing"-Modus konfiguriert sind.

11. Verteilungssystem (100) nach irgendeinem der vorhergehenden Ansprüche, **dadurch gekennzeichnet, dass** das Computerverwaltungsgerät (200) einen Fernserver (201) umfasst, wobei die Verarbeitungsmittel (202) einen Mikroprozessor (2021) umfassen; die nicht flüchtigen Speichermittel (203) eine Festplatte (2031) umfassen und die Fernkommunikationsmittel (204) eine Netzwerkschnittstellensteuerung (2041) umfassen, die für den Internetanschluss konfiguriert ist.

12. Verteilungssystem (100) nach einem der vorhergehenden Ansprüche, **dadurch gekennzeichnet, dass** die mindestens eine Energiebuchse (3) der Versorgungsvorrichtung (1) eine Energiesteckbuchse (3) zur Versorgung von elektrischer Energie umfasst, die die gleichen Eigenschaften wie die am Eingang der Versorgungsvorrichtung (1) angelegte elektrische Energie aufweist.

13. Verteilungssystem (100) nach irgendeinem der vorhergehenden Ansprüche, **dadurch gekennzeichnet, dass** die mindestens eine Energiebuchse (3) der Versorgungsvorrichtung (1) einen USB-Buchsenverbinder umfasst, der geeignet ist Energie zu versorgen, die mittels zwischen dem USB-Verbinder und den Anschlussmitteln (2) angeordneten elektrischen Transformationsmitteln geeignet transformiert worden ist.

14. Verteilungssystem (100) nach irgendeinem der vorhergehenden Ansprüche, **dadurch gekennzeichnet, dass** die Kommunikationsmittel (7) der Versorgungsvorrichtung (1) strukturiert und konfiguriert sind, um den Bluetooth-Kommunikationsstandard zu implementieren.

15. Verfahren zur Nutzung eines Roamingdienstes zur Versorgung von elektrischer Energie mittels des Verteilungssystems (100) nach irgendeinem der vorhergehenden Ansprüche, **dadurch gekennzeichnet, dass** es folgende Operationen vorsieht:
- Öffnen eines Kommunikationskanals zwischen einer elektronischen Vorrichtung (300), die einem Benutzer gehört, und dem Computerverwaltungsgerät (200);
- Erstellen, über die elektronische Vorrichtung (300), eines neuen Kontos für den Roamingdienst zur Versorgung von elektrischer Energie oder, falls das Konto zuvor erstellt wurde, Zugriff eines Benutzers, über die elektronische Vorrichtung (300), auf dessen in der Datenbank (DB) vorhandenen Daten, die im Computerverwaltungsgerät (200) vorhanden ist;
- Erwerb durch einen Benutzer, mittels der eigenen elektronischen Vorrichtung (300), eines oder mehrerer Roamingdienste zur Versorgung von elektrischer Energie;
- Identifizieren, mittels der elektronischen Vorrichtung (300), der spezifischen Versorgungsvorrichtung (1), die für den Zugriff auf den erworbenen Dienst verwendet werden soll;
- nach der Identifizierung, einen Kommunikationskanal zwischen der elektronischen Vorrichtung (300), die dem Benutzer gehört, und der Versorgungsvorrichtung (1) herstellen;
- Senden, mittels der elektronischen Vorrichtung (300), der Information (I) über die Bedingungen für die Versorgung der elektrischen Energie, die dem erworbenen Dienst entsprechen, und des Steuersignals (C), um die Versorgung der Versorgungsvorrichtung (1) zu starten;
- Versorgung der elektrischen Energie durch die Versorgungsvorrichtung (1), so dass die durch die Information (I) festgelegten Versorgungsbedingungen aufrechterhalten werden.

## Revendications

1. Système (100) pour distribuer de l'énergie électrique en itinérance, **caractérisé en ce qu'**il comprend:
- au moins un dispositif (1) pour alimenter de l'énergie électrique en itinérance, fourni avec:
- des moyens de connexion (2) pour la connexion à une source d'énergie électrique (E);
- au moins une prise électrique (3) pour alimenter ladite énergie électrique;
- des moyens d'élaboration (4);
- des moyens de mémorisation non volatile (5) opérationnellement connectés auxdits moyens d'élaboration (4);
- des moyens (6) pour interrompre la continuité électrique, électriquement entreposés entre ladite au moins une prise électrique (3) et lesdits moyens de connexion (2), lesdits moyens d'interruption (6) étant opérationnellement connectés auxdits moyens d'élaboration (4);
- des moyens de communication (7) pour permettre la communication avec au moins un dispositif électronique externe (300) opérationnellement connectés auxdits moyens d'élaboration (4);
- une ou plusieurs séquences d'instructions informatiques (S₁) mémorisées dans lesdits moyens de mémorisation non volatile (5), lesdites une ou plusieurs séquences d'instruction informatiques (S₁), lorsqu'elles sont exécutées par lesdits moyens d'élaboration (4), prévoyant la commutation desdits moyens d'interruption (6) de sorte à permettre l'alimentation d'énergie électrique à travers ladite au moins une prise électrique (3) à la suite d'un signal de commande (C) et selon une pluralité d'informations (I) envoyées par ledit dispositif électronique externe (300) et reçues à travers lesdits moyens de communication (7), lesdites informations (I) concernant la condition d'alimentation d'énergie électrique.
- un appareil informatique de gestion (200) fourni avec:
- des moyens d'élaboration (202);
- des moyens de mémorisation non volatile (203) opérationnellement connectés auxdits moyens d'élaboration (202);
- des moyens de communication à distance (204) pour permettre la communication avec ledit au moins un dispositif électronique externe (300);
- une base de données (DB) mémorisée dans lesdits moyens de mémorisation non volatile (203), ladite base de données (DB) incluant des informations concernant les utilisateurs en itinérance, lesdites informations comprenant des données d'identification et de facturation pour chaque utilisateur en itinérance et lesdites informations (I) concernant les conditions pour alimenter ladite énergie électrique;
- une ou plusieurs séquences d'instructions informatiques (S₂) mémorisées dans lesdits moyens de mémorisation non volatile (203), lesdites une ou plusieurs séquences d'instructions informatiques (S₂), lorsqu'elles sont exécutées par lesdits moyens d'élaboration (202), permettant d'établir un canal de communication avec ledit au moins un dispositif électronique externe (300) à travers lesdits moyens de communication à distance (204), lesdites une ou plusieurs séquences d'instructions informatiques (S₂) étant en outre configurées pour envoyer lesdites informations (I) audit dispositif électronique externe (300);
- ledit au moins un dispositif électronique (300) comprenant:
- des moyens d'élaboration (301);
- des moyens de mémorisation non volatile (302) opérationnellement connectés auxdits moyens d'élaboration (301);
- des premiers moyens de communication (303) pour établir un premier canal de communication avec ledit au moins un dispositif d'alimentation (1);
- des deuxièmes moyens de communication (304) pour établir un deuxième canal de communication avec ledit appareil informatique de gestion (200);
- une ou plusieurs séquences d'informations informatiques (S₃) mémorisées dans lesdits moyens de mémorisation (302), lesdites une ou plusieurs séquences d'informations informatiques (S₃), lorsqu'elles sont exécutées par lesdits moyens d'élaboration (301), permettant de:
- établir ledit deuxième canal de communication avec ledit appareil informatique de gestion (200) pour recevoir lesdites informations (I) concernant un utilisateur spécifique en itinérance;
- identifier ledit au moins un dispositif d'alimentation (1);
- établir ledit premier canal de communication avec ledit dispositif d'alimentation (1);
- envoyer audit dispositif d'alimentation (1) lesdites informations (I) reçues dudit appareil informatique de gestion (200) et un signal de commande (C) pour démarrer l'alimentation d'énergie électrique.

2. Système de distribution (100) selon la revendication 1, **caractérisé en ce que** lesdites informations (I) concernant la condition d'alimentation d'énergie électrique comprennent, en combinaison ou en alternative, la durée maximale d'utilisation dudit au moins un dispositif d'alimentation (1) en termes de temps (t), la quantité maximale d'énergie électrique (kWh) qui peut être prélevée et/ou la puissance électrique maximale (kW) qui peut être atteinte.

3. Système de distribution (100) selon l'une quelconque des revendications précédentes, **caractérisé en ce que** lesdites une ou plusieurs séquences d'instructions informatiques (S₁) mémorisées dans lesdits moyens de mémorisation non volatile (5) dudit au moins un dispositif d'alimentation (1) sont également configurées, lorsqu'elles sont exécutées par lesdits moyens d'élaboration (4), pour permettre audit dispositif d'alimentation (1) d'interrompre de manière autonome l'alimentation de ladite énergie électrique après avoir atteint une ou plusieurs des limites définies par lesdites informations (I) concernant la condition d'alimentation d'énergie électrique.

4. Système de distribution (100) selon l'une quelconque des revendications précédentes, **caractérisé en ce que** ledit dispositif d'alimentation (1) comprend des moyens d'identification unique (8).

5. Système de distribution (100) selon la revendication 4, **caractérisé en ce que** lesdits moyens d'identification unique (8) comprennent un code-barres (81) imprimé sur ledit dispositif d'alimentation (1), ledit code-barres (81) correspondant à un code d'identification unique associé audit dispositif d'alimentation (1).

6. Système de distribution (100) selon la revendication 4, **caractérisé en ce que** lesdits moyens d'identification unique (8) comprennent une étiquette RFID et/ou un dispositif NFC dans lesquels un code d'identification unique associé audit dispositif d'alimentation (1) est mémorisé.

7. Système de distribution (100) selon l'une quelconque des revendications précédentes, **caractérisé en ce que** ledit dispositif d'alimentation (1) comprend des moyens (9) pour mesurer les caractéristiques électriques de l'énergie électrique alimentée à travers ladite prise électrique (3).

8. Système de distribution (100) selon la revendication 7, **caractérisé en ce que** lesdits moyens de mesure (9) sont configurés pour détecter les valeurs de courant électrique et tension électrique de ladite énergie électrique alimentée par ledit dispositif d'alimentation (1).

9. Système de distribution (100) selon l'une quelconque des revendications précédentes, **caractérisé en ce que** ledit au moins un dispositif électronique (300) est un smartphone ou une tablette détenu par l'utilisateur en itinérance dans lesquels une application informatique comprenant ladite séquence ou lesdites séquences d'instructions informatiques (S₃) est chargée et exécutée.

10. Système de distribution (100) selon l'une quelconque des revendications précédentes, **caractérisé en ce que** lesdits premiers moyens de communication (303) dudit dispositif électronique (300) et lesdits moyens de communication (7) dudit dispositif d'alimentation (1) comprennent tous deux des moyens de transmission de données par ondes radio configurés pour opérer en mode "appairage".

11. Système de distribution (100) selon l'une quelconque des revendications précédentes, **caractérisé en ce que** ledit appareil informatique de gestion (200) comprend un serveur distant (201) dans lequel lesdits moyens d'élaboration (202) comprennent un microprocesseur (2021), lesdits moyens de mémorisation non volatile (203) comprennent un disque dur (2031) et lesdits moyens de communication à distance (204) comprennent un contrôleur d'interface réseau (2041) configuré pour une connexion Internet.

12. Système de distribution (100) selon l'une quelconque des revendications précédentes, **caractérisé en ce que** ladite au moins une prise électrique (3) dudit dispositif d'alimentation (1) comprend une prise électrique à fiche (3) pour alimenter de l'énergie électrique avec les mêmes caractéristiques que l'énergie électrique disposée en correspondance de l'entrée dudit dispositif d'alimentation (1).

13. Système de distribution (100) selon l'une quelconque des revendications précédentes, **caractérisé en ce que** ladite au moins une prise électrique (3) dudit dispositif d'alimentation (1) comprend un connecteur USB femelle, capable d'alimenter de l'énergie transformée de manière adaptée par des moyens de transformation électriques entreposés entre ledit connecteur USB et lesdits moyens de connexion (2).

14. Système de distribution (100) selon l'une quelconque des revendications précédentes, **caractérisé en ce que** lesdits moyens de communication (7) dudit dispositif d'alimentation (1) sont structurés et configurés pour mettre en oeuvre le standard de communication Bluetooth.

15. Procédé pour utiliser un service d'alimentation d'énergie électrique en itinérance au moyen du système de distribution (100) selon l'une quelconque des revendications précédentes, **caractérisé en ce qu'**il prévoit les opérations suivantes:
- ouvrir un canal de communication entre un dispositif électronique (300) détenu par un utilisateur et l'appareil informatique de gestion (200);
- créer, à travers ledit dispositif électronique (300), un nouveau compte concernant le service d'alimentation d'énergie électrique en itinérance ou, si ledit compte a été créé préalablement, accéder de la part d'un utilisateur, au moyen dudit dispositif électronique (300), aux données de celui-ci présentes dans la base de données (DB) présente dans ledit appareil informatique de gestion (200);
- acheter, de la part d'un utilisateur, au moyen dudit dispositif électronique (300) détenu, un ou plusieurs services pour alimenter de l'énergie électrique en itinérance;
- identifier, au moyen dudit dispositif électronique (300), le dispositif d'alimentation (1) spécifique destiné à être utilisé pour accéder au service acheté;
- après ladite identification, établir un canal de communication entre ledit dispositif électronique (300) détenu par l'utilisateur et ledit dispositif d'alimentation (1);
- envoyer les informations (I) concernant les conditions d'alimentation d'énergie électrique conformes au service acheté et au signal de commande (C) pour démarrer l'alimentation audit dispositif d'alimentation (1) au moyen dudit dispositif électronique (300);
- alimenter, par ledit dispositif d'alimentation (1), l'énergie électrique de sorte que les conditions d'alimentation établies par lesdites informations (I) soient maintenues.
